# EUROPEAN PATENT APPLICATION

(11) **EP 4 470 731 A1**
(43) Date of publication of application: **04.12.2024**
(21) Application number: 23747111.5
(22) Date of filing: 27.01.2023
(51) Int. Cl.: B25J 13/08

(54) **ESTIMATION APPARATUS, ESTIMATION METHOD, AND CONTROLLER**

(30) Priority: 27.01.2022 JP 2022011202
(71) Applicant: Kyocera Corporation, Kyoto-shi, Kyoto 612-8501 (JP)
(72) Inventor: NISHIDA, Atsushi, Kyoto-shi, Kyoto 612-8501 (JP)
(74) Representative: TBK
(86) International application number: PCT/JP2023/002712
(87) International publication number: WO 2023/145901

(57) **Abstract**

An estimation device includes an acquirer and a controller. The acquirer acquires information on a holding target object to be held by a holder. The controller estimates a holding position at which the holder is caused to hold the holding target object, based on the information on the holding target object in consideration of an acquisition point of the information on the holding target object.

## Description

### CROSS-REFERENCE TO RELATED APPLICATIONS

This application claims priority from Japanese Patent Application No. 2022-11202 (filed on January 27, 2022), the entire disclosure of which is incorporated herein by reference.

### TECHNICAL FIELD

The present disclosure relates to an estimation device, an estimation method, and a control device.

### BACKGROUND OF INVENTION

In the related art, a known neural network infers a gripping position by using an image as an input (see, for example, Non Patent Literature 1).

### CITATION LIST

### NON PATENT LITERATURE

Non Patent Literature 1: "Grasping Detection using Deep Convolutional Neural Network with Graspability", Journal of the Robotics Society of Japan Vol.36 No.8, pp.559-566, 2018

### SUMMARY

In an embodiment of the present disclosure, an estimation device includes an acquirer and a controller. The acquirer is configured to acquire information on a holding target object to be held by a holder. The controller is configured to estimate a holding position at which the holder is caused to hold the holding target object, based on the information on the holding target object in consideration of an acquisition point of the information on the holding target object.

In an embodiment of the present disclosure, an estimation device includes an acquirer and a controller. The acquirer is configured to acquire information on a holding target object to be held by a holder. The controller is configured to estimate a holding position at which the holder is caused to hold the holding target object, based on the information on the holding target object. The controller is configured to calculate, as a directional deviation, a difference between a direction from an acquisition point of the information on the holding target object toward the holding target object and a direction in which the holder holds the holding target object. The controller is configured to estimate the holding position at which the holder is caused to hold the holding target object, based on the information on the holding target object if the directional deviation satisfies a predetermined condition. The controller is configured to estimate the holding position at which the holder is caused to hold the holding target object, based on the acquisition point and the information on the holding target object if the directional deviation does not satisfy the predetermined condition.

In an embodiment of the present disclosure, an estimation method includes acquiring information on a holding target object to be held by a holder. The estimation method includes estimating a holding position at which the holder is caused to hold the holding target object, based on the information on the holding target object in consideration of an acquisition point of the information on the holding target object.

In an embodiment of the present disclosure, an estimation method includes acquiring information on a holding target object to be held by a holder. The estimation method includes calculating, as a directional deviation, a difference between a direction from an acquisition point of the information on the holding target object toward the holding target object and a direction in which the holder holds the holding target object. The estimation method includes estimating the holding position at which the holder is caused to hold the holding target object, based on the information on the holding target object if the directional deviation satisfies a predetermined condition. The estimation method includes estimating the holding position at which the holder is caused to hold the holding target object, based on the acquisition point and the information on the holding target object if the directional deviation does not satisfy the predetermined condition.

In an embodiment of the present disclosure, a control device causes a holder to hold a holding target object at a holding position estimated by the estimation device or at a holding position estimated by executing the estimation method.

### BRIEF DESCRIPTION OF THE DRAWINGS

FIG. 1 is a schematic diagram illustrating a configuration example of a robot control system according to an embodiment.
FIG. 2 is a cross-sectional view of an example of a holding position at which a holding target object is held by a hand.
FIG. 3 is a block diagram illustrating a configuration example of the robot control system according to an embodiment.
FIG. 4 is a diagram illustrating an example of an inference model that infers a holding position.
FIG. 5 is a diagram illustrating an example of an estimated result of the holding position when the holding target object is viewed from directly above (when a directional deviation is small).
FIG. 6 is a diagram illustrating an example of the estimated result of the holding position when the holding target object is imaged obliquely (when the directional deviation is large).
FIG. 7 is a flowchart illustrating an example of a procedure of an estimation method according to an embodiment.
FIG. 8 is a flowchart illustrating an example of a procedure of an estimation method including determination of a directional deviation.

### DESCRIPTION OF EMBODIMENTS

### (Configuration Example of Robot Control System 1)

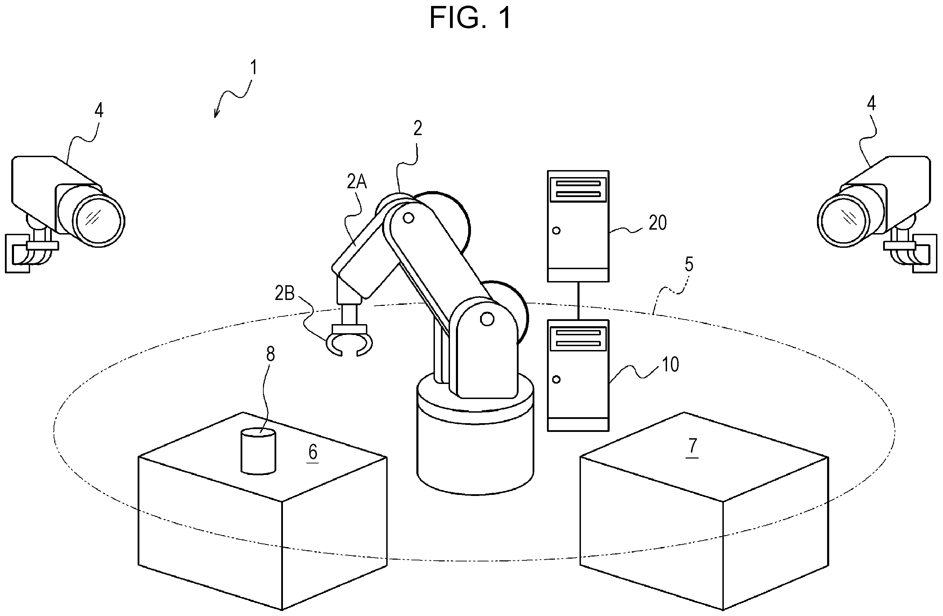

As illustrated in FIGs. 1, 2, and 3, a robot control system 1 according to an embodiment of the present disclosure includes a robot 2, an information acquisition unit 4, a control device 10, and an estimation device 20. The control device 10 controls the robot 2. The estimation device 20 estimates a holding position 82 at which a holding target object 8 is to be held by the robot 2, and outputs the holding position 82 to the control device 10.

In the present embodiment, the robot 2 holds the holding target object 8 at a work start table 6. That is, the control device 10 controls the robot 2 to hold the holding target object 8 at the work start table 6. The robot 2 may move the holding target object 8 from the work start table 6 to a work target table 7. The robot 2 operates inside an operation range 5.

### <Robot 2>

The robot 2 includes an arm 2A and a holder 2B. The arm 2A may be, for example, a six-axis or seven-axis vertical articulated robot. The arm 2A may be a three-axis or four-axis horizontal articulated robot or a SCARA (selective compliance assembly robot arm) robot. The arm 2A may be a two-axis or three-axis Cartesian robot. The arm 2A may be a parallel link robot or the like. The number of axes of the arm 2A is not limited to the exemplified numbers. In other words, the robot 2 includes the arm 2A connected by multiple joints, and operates as result of driving of the joints.

The holder 2B may be, for example, a hand or a suction part. In the present embodiment, the holder 2B is a hand 2B. The holder 2B is not limited to the hand, and may be, for example, a suction part including a suction nozzle that sucks the holding target object 8. Note that in the description below, holding the holding target object 8 with the hand 2B may be referred to as gripping. In this case, the holding target object 8 may be referred to as a gripping target object 8. On the other hand, when a suction part is adopted as the holder 2B, "gripping" used in the description below may be read and interpreted as "holding". For example, "gripping position 82" used in the description below may be interpreted as "holding position 82".

The hand 2B may include, for example, a gripper capable of gripping the gripping target object 8. The gripper may include at least one finger 2C. The finger 2C of the gripper may include one or more joints. The finger 2C of the gripper may include a suction part that grips the gripping target object 8 by suction. The hand 2B may be configured as a single finger 2C including a suction part. The hand 2B may be configured as two or more fingers 2C that grip the gripping target object 8 therebetween. The hand 2B is not limited to these examples, and may be capable of performing other various operations.

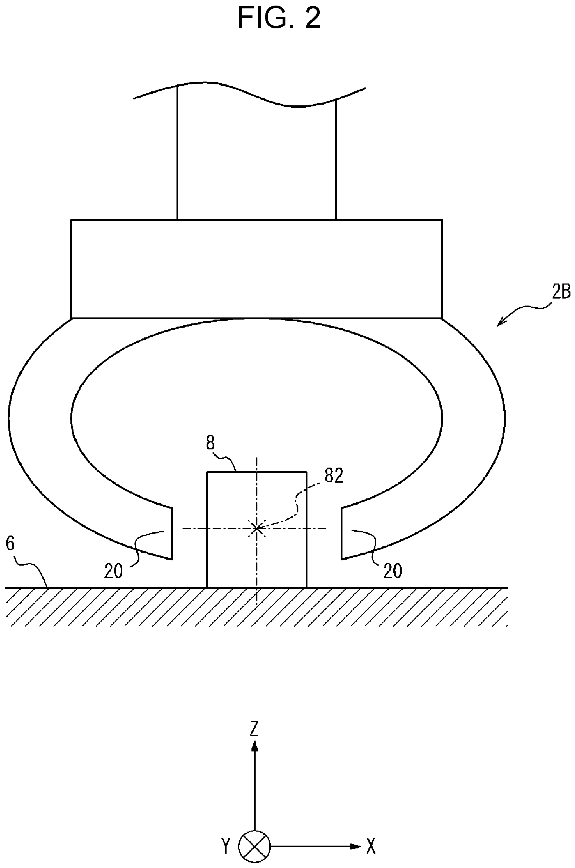

In the configuration illustrated in FIG. 2, the hand 2B includes a gripper including two fingers 2C. In this case, the hand 2B grips the gripping target object 8 with the two fingers 2C. A position at which the gripping target object 8 is to be gripped is illustrated as the gripping position 82. The gripping position 82 corresponds to a midpoint (an intersection point of one-dot-chain lines in horizontal and vertical directions in FIG. 2) of a line connecting points at which the two fingers 2C come into contact with the gripping target object 8 (a line represented as the one-dot-chain line in the horizontal direction in FIG. 2).

### <Control Device 10>

The control device 10 causes the arm 2A of the robot 2 to operate, and thus can control the position of the hand 2B. The hand 2B may include a shaft serving as a reference of a direction in which the hand 2B acts on the gripping target object 8. When the hand 2B includes a shaft, the control device 10 causes the arm 2A to operate, and thus can control the direction of the shaft of the hand 2B. The control device 10 controls the start and the end of an operation of the hand 2B on the gripping target object 8. The control device 10 controls the operation of the hand 2B while controlling the position of the hand 2B or the direction of the shaft of the hand 2B, and thus can move or process the gripping target object 8. In the configuration illustrated in FIG. 1, the control device 10 controls the robot 2 to cause the hand 2B to grip the gripping target object 8 at the work start table 6 and cause the hand 2B to move to the work target table 7. The control device 10 controls the robot 2 to cause the hand 2B to release the gripping target object 8 at the work target table 7. In this way, the control device 10 can cause the robot 2 to move the gripping target object 8 from the work start table 6 to the work target table 7.

The control device 10 may include at least one processor. The processor may execute a program for implementing various functions of the control device 10. The processor may be implemented as a single integrated circuit. The integrated circuit is also referred to as an IC. The processor may be implemented as multiple integrated circuits and discrete circuits connected to be able to perform communication. The processor may be implemented based on various other known technologies.

The control device 10 may include a storage. The storage may include an electromagnetic storage medium such as a magnetic disk, or may include a memory such as a semiconductor memory or a magnetic memory. The storage stores various kinds of information. The storage stores a program or the like to be executed by the control device 10. The storage may be a non-transitory readable medium. The storage may function as a work memory of the control device 10. At least part of the storage may be a storage separate from the control device 10.

### <Estimation Device 20>

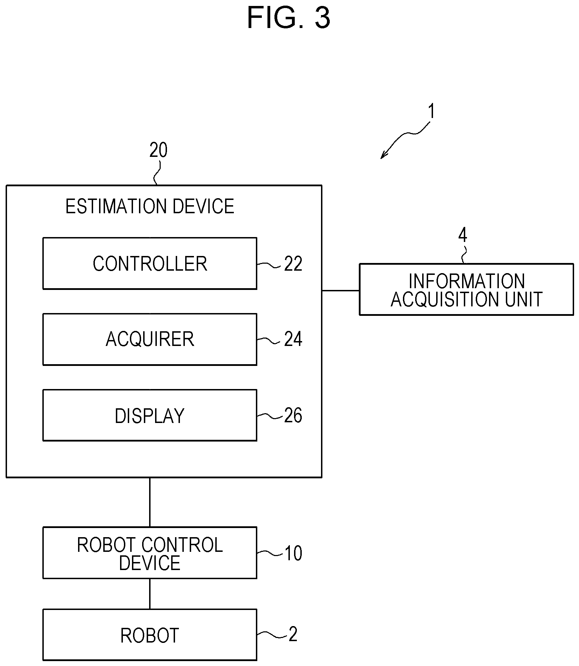

As illustrated in FIG. 3, the estimation device 20 includes a controller 22, an acquirer 24, and a display 26. The acquirer 24 acquires information on the gripping target object 8. The controller 22 estimates a position at which the hand 2B is caused to grip the gripping target object 8, based on the information on the gripping target object 8, and outputs the estimated position to the control device 10.

The display 26 may display the estimated result of the gripping position 82 of the gripping target object 8. The acquirer 24 may receive an input for correcting the gripping position 82 from a user who has viewed the estimated result of the gripping position 82. The controller 22 may correct the gripping position 82, based on the input from the user, and output the corrected gripping position 82 to the control device 10.

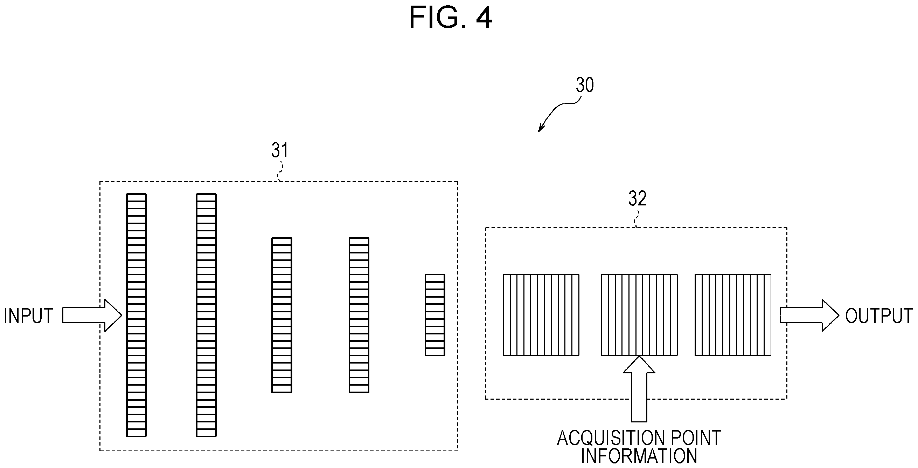

The controller 22 may estimate the gripping position 82 by using an inference model. As illustrated in FIG. 4, the inference model may be a trained model 30. The trained model 30 can be represented as a model in which a first model 31 and a second model 32 are connected to each other.

The first model 31 outputs a result obtained by extracting a feature quantity of input information. The feature quantity represents, for example, an appearance feature such as an edge or a pattern of the gripping target object 8. The first model 31 may include a CNN (Convolution Neural Network) including multiple layers. The first model 31 may include, for example, convolution and pooling.

The second model 32 makes a predetermined determination on the input information, based on the output of the first model 31. Specifically, the second model 32 may output the estimated result of the gripping position 82 of the gripping target object 8 included in the input information, based on the feature quantity output by the first model 31. The second model 32 may include a fully connected layer that processes the extracted result of the feature quantity obtained by the first model 31.

In other words, the inference model may include a convolution layer that receives an input of the information on the gripping target object 8, and a fully connected layer that processes an output of the convolution layer and outputs an inferred result of the gripping position 82. The fully connected layer may include a layer that takes acquisition point information into consideration.

To provide control and processing capabilities for executing various functions, the controller 22 may include at least one processor. The processor may execute a program for implementing the various functions of the controller 22. The processor may be implemented as a single integrated circuit. The integrated circuit is also referred to as an IC. The processor may be implemented as multiple integrated circuits and discrete circuits connected to be able to perform communication. The processor may be implemented based on various other known technologies.

The controller 22 may include a storage. The storage may include an electromagnetic storage medium such as a magnetic disk, or may include a memory such as a semiconductor memory or a magnetic memory. The storage stores various kinds of information. The storage stores a program or the like to be executed by the controller 22. The storage may be a non-transitory readable medium. The storage may function as a work memory of the controller 22. At least part of the storage may be a storage separate from the controller 22.

The acquirer 24 may include a communication device that can perform wired or wireless communication. The communication device can perform communication in accordance with communication schemes based on various communication standards. The communication device may be based on a known communication technique.

The acquirer 24 may include an input device that receives an input of information, data, or the like from a user. The input device may include, for example, a touch panel or a touch sensor, or a pointing device such as a mouse. The input device may include a physical key. The input device may include an audio input device such as a microphone.

The display 26 includes a display device that displays information, data, or the like to a user. The display device outputs, for example, visual information such as an image, a text, or a figure. The display device may include, for example, an LCD (Liquid Crystal Display), an organic EL (Electro-Luminescence) display or an inorganic EL display, or a PDP (Plasma Display Panel). The display device is not limited to these displays, and may include displays of various other types. The display device may include a light-emitting device such as an LED (Light Emission Diode) or an LD (Laser Diode). The display device may include various other devices.

### <Information Acquisition Unit 4>

The information acquisition unit 4 acquires information on the gripping target object 8. The information acquisition unit 4 may include a camera. The camera serving as the information acquisition unit 4 captures an image of the gripping target object 8, as information on the gripping target object 8. The information acquisition unit 4 may include a depth sensor. The depth sensor serving as the information acquisition unit 4 acquires depth data of the gripping target object 8. The depth data may be transformed into point cloud information of the gripping target object 8.

### (Operation Example of Robot Control System 1)

In the robot control system 1, the control device 10 controls the operation of the robot 2. The estimation device 20 estimates a position at which the hand 2B is caused to grip the gripping target object 8 when the hand 2B of the robot 2 operates to grip the gripping target object 8. The control device 10 determines the position at which the hand 2B is caused to grip the gripping target object 8, based on the estimated result obtained by the estimation device 20, and controls the arm 2A or the hand 2B of the robot 2 so that the hand 2B grips the gripping target object 8 at the determined position. An operation example of the estimation device 20 is described below.

The acquirer 24 of the estimation device 20 acquires information on the gripping target object 8 to be gripped by the hand 2B from the information acquisition unit 4. The information on the gripping target object 8 is also referred to as target information. The information on the gripping target object 8 includes an image of the gripping target object 8 captured from the information acquisition unit 4, distance data from the information acquisition unit 4 to the gripping target object 8, or the like. The acquirer 24 outputs the information on the gripping target object 8 (target information) acquired from the information acquisition unit 4, to the controller 22 of the estimation device 20. In other words, the controller 22 acquires, via the acquirer 24, the information on the gripping target object 8 (target information). The controller 22 estimates the position (gripping position 82) at which the hand 2B is caused to grip the gripping target object 8, based on the information on the gripping target object 8 (target information) in consideration of the position at which the information on the gripping target object 8 (target information) is acquired. The controller 22 may input the information on the gripping target object 8 (target information) to, for example, an inference model such as the trained model 30, and estimate, as the gripping position 82, an inferred result output from the inference model.

When the hand 2B includes two fingers 2C, the gripping position 82 may be represented by coordinates of each of the two fingers 2C. The gripping position 82 may be represented by coordinates of a midpoint of the two fingers 2C and a rotation angle of the hand 2B. Even when the hand 2B includes three or more fingers 2C, the gripping position 82 may be represented by coordinates of each of the fingers 2C, or may be represented by average coordinates of the coordinates of the fingers 2C and a rotation angle of the hand 2B. When the information on the gripping target object 8 is information that is two-dimensionally mapped such as an image or distance data, the gripping position 82 may be represented as coordinates in a plane on which the information is mapped. When the information on the gripping target object 8 is information that is three-dimensionally represented, the gripping position 82 may be represented as three-dimensional coordinates.

The position at which the information on the gripping target object 8 (target information) is acquired is also referred to as an acquisition point. Information on the acquisition point is also referred to as acquisition point information. The acquisition point information may include information on a direction in which the acquisition point is located when the acquisition point is viewed from the gripping target object 8. The direction in which the acquisition point is located when the acquisition point is viewed from the gripping target object 8 is also referred to as an acquisition direction. The acquisition point information may include information on a direction in which the hand 2B grips the gripping target object 8 (a direction or posture of the hand 2B when the hand 2B grips the gripping target object 8). The direction in which the hand 2B grips the gripping target object 8 is also referred to as a gripping direction. Note that the gripping direction may just be set in advance to, for example, a direction of weight or a direction perpendicular to a work surface of a work table such as the work start table 6 or the work target table 7. Each of the acquisition direction and the gripping direction may be represented by two types of angles in a polar coordinate system or may be represented as a unit vector in a three-dimensional space. The acquisition point information may include information representing a relative relationship between the acquisition direction and the gripping direction. Specifically, the relative relationship between the acquisition direction and the grasping direction can be represented as a difference between respective angles representing the acquisition direction and the grasping direction.

The controller 22 may acquire the acquisition point information from the information acquisition unit 4. The acquisition point information may be information for specifying a predefined acquisition point. The acquisition point information may be information representing the direction (acquisition direction) in which the information on the gripping target object 8 is acquired by roll, pitch, and yaw or by quaternions with respect to the position of the gripping target object 8 serving as an origin. The quaternions are a format representing a posture rotated by a predetermined angle about a direction vector serving as a rotation axis.

The controller 22 may generate the acquisition point information based on the target information, and thus acquire the acquisition point information. For example, when an image is acquired as the target information, the acquisition point information may be generated using a P3P algorithm, which is a type of Perspective-n-Point algorithm, using a marker whose position on the three-dimensional coordinates is known. The acquisition point information may be generated by imaging a reference marker together with the gripping target object 8 and comparing a shape of the reference marker in the image with a shape of the reference marker obtained when the reference marker faces the camera serving as the information acquisition unit 4. The acquisition point information may be generated by, for example, defining a reference posture of the gripping target object 8 and comparing an outer shape of the gripping target object 8 in the image serving as the target information, distance data from the information acquisition unit 4 to the gripping target object 8, or the like with information obtained when the gripping target object 8 is in the reference posture.

The difference between the acquisition direction and the gripping direction is also referred to as a directional deviation. The controller 22 may calculate the difference between the acquisition direction and the gripping direction as a value representing the directional deviation. When the acquisition direction and the gripping direction are represented by angles, the controller 22 may calculate a difference between the angles as the value representing the directional deviation. When the acquisition direction and the gripping direction are represented by unit vectors, the controller 22 may calculate an angle formed by the unit vectors of the acquisition direction and the gripping direction, or may calculate an inner product or an outer product of the unit vectors of the acquisition direction and the gripping direction, as the value representing the directional deviation.

If the directional deviation satisfies a predetermined condition, the controller 22 may estimate the gripping position 82 at which the hand 2B is caused to grip the gripping target object 8, based on the information on the gripping target object 8 (target information). If the directional deviation does not satisfy the predetermined condition, the controller 22 may estimate the gripping position 82 at which the hand 2B is caused to grip the gripping target object 8, based on the acquisition point and the information on the gripping target object 8 (target information).

The predetermined condition may include a condition that the value representing the directional deviation (the difference between the acquisition direction and the gripping direction) is within a predetermined range. Specifically, the predetermined condition may include a condition that an angle difference calculated as the directional deviation is smaller than an angle threshold. The angle threshold may be set to, for example, 10 degrees. The predetermined condition may include a condition that an absolute value of the outer product of the unit vectors that is calculated as the directional deviation is smaller than an outer product threshold. The predetermined condition may include a condition that the inner product of the unit vectors that is calculated as the directional deviation is greater than an inner product threshold.

### <Configuration Example of Inference Model that Takes Acquisition Point Information into Consideration>

As described above, the controller 22 can estimate the gripping position 82 by using the trained model 30 as the inference model. The second model 32 may output the estimated result of the gripping position 82 in consideration of the acquisition point information. Specifically, the second model 32 may receive an input of the acquisition point information. The second model 32 may process the feature quantity output from the first model 31 in three steps. For example, the second model 32 may include a layer that performs preprocessing as processing of a first step. The second model 32 may include a layer that performs connection processing as processing of a second step. The second model 32 may include a layer that performs output processing as processing of a third step.

The second model 32 may receive an input of the acquisition point information in the layer that performs the connection processing as the processing of the second step. That is, as the processing of the second step of the second model 32, processing of connecting the feature quantity of the gripping target object 8 and the acquisition point information may be performed. In this case, the feature quantity of the gripping target object 8 output from the first model 31 is processed so that the acquisition point information can be connected in the connection processing of the second step.

In the present configuration example, the processing of the second model 32 is divided into three steps. However, the processing may be divided into four or more steps, may be divided into two steps, or need not be divided into multiple steps.

### <Comparison between Case of Small Directional Deviation and Case of Large Directional Deviation>

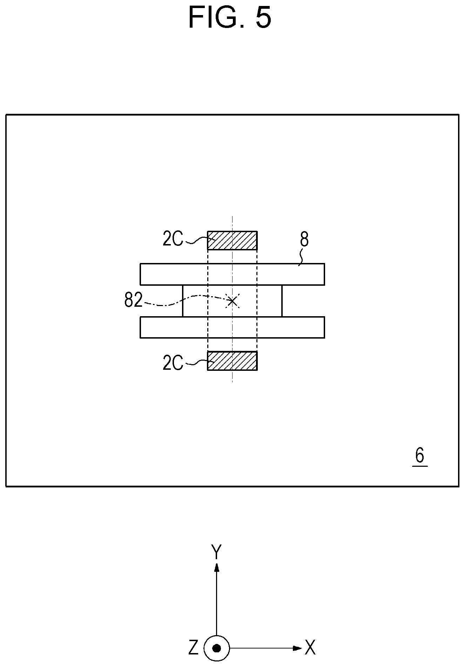

For example, as illustrated in FIG. 5, suppose that an image serving as the target information is acquired such that the acquisition direction and the gripping direction coincide with each other in a direction along a Z-axis (the directional deviation reduces). When the gripping target object 8 is gripped with the two fingers 2C, the gripping position 82 may be represented by the coordinates of the midpoint of the two fingers 2C in the image serving as the target information. The gripping position 82 may be represented by information specifying that the two fingers 2C of the hand 2B are aligned in a line in a Y-axis direction.

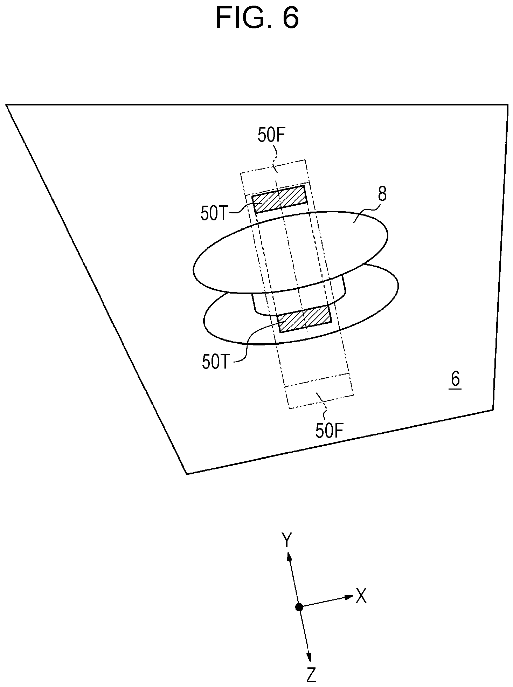

On the other hand, for example, as illustrated in FIG. 6, suppose that an image serving as the target information is acquired such that the acquisition direction is a direction inclined toward a positive direction of the Y-axis with respect to the Z-axis when the gripping direction is a direction along the Z-axis. The gripping target object 8 is inclined in the image. When the positions of the gripping fingers 2C are estimated based on the state of the gripping target object 8 in the image, estimated gripping positions 50F represented by two-dot-chain lines are estimated as the gripping position 82. However, when the hand 2B grips the gripping target object 8 from the actual gripping direction, the hand 2B fails to grip or has difficulty in gripping the gripping target object 8 at the estimated gripping positions 50F.

Accordingly, when the positions of the fingers 2C are estimated in consideration of the gripping target object 8 being inclined in the image (in consideration of the acquisition point), estimated gripping positions 50T are estimated as the gripping position 82. The estimated gripping positions 50T appear to deviate from the gripping target object 8 in the image. However, when the hand 2B grips the gripping target object 8 from the actual gripping direction, the hand 2B grips the gripping target object 8 at the estimated gripping positions 50T with ease. That is, the controller 22 estimates the gripping position 82 in consideration of the acquisition point, and thus can make a success rate of the hand 2B gripping the gripping target object 8 higher than when the controller 22 estimates the gripping position 82 without consideration of the acquisition point.

A computation load of the inference model when outputting the estimated result of the gripping position 82 in consideration of the acquisition point is larger than a computation load of the inference model when outputting the estimated result of the gripping position 82 without consideration of the acquisition point. When the gripping position 82 is estimated with a high accuracy without consideration of the acquisition point as illustrated in FIG. 5, the acquisition point need not be taken into consideration. Conversely, when the estimation accuracy of the gripping position 82 decreases unless the acquisition point is taken into consideration as illustrated in FIG. 6, the acquisition point may be taken into consideration. Taking the acquisition point into consideration when needed may reduce the computation load of the inference model.

### <Example of Procedure of Estimation Method>

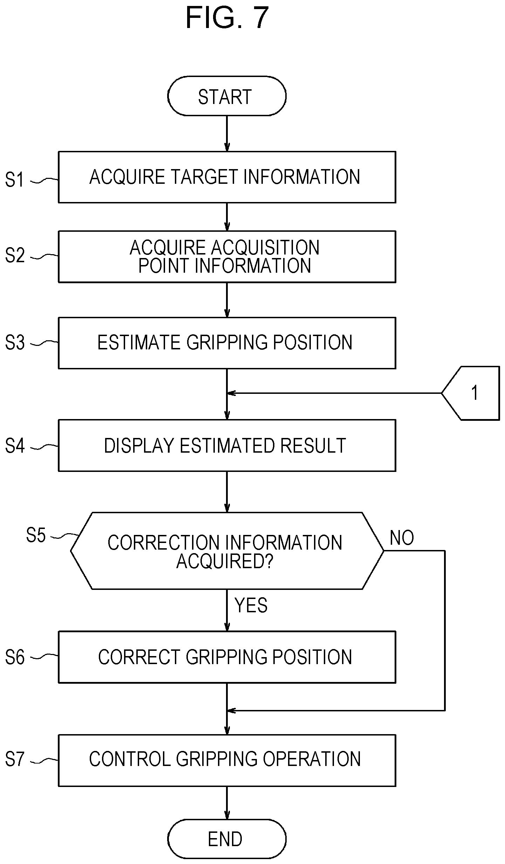

The controller 22 of the estimation device 20 may execute an estimation method including a procedure of a flowchart illustrated in FIG. 7. The estimation method may be implemented as an estimation program to be executed by a processor included in the controller 22. The estimation program may be stored in a non-transitory computer-readable medium.

The controller 22 acquires the target information from the information acquisition unit 4 (step S1). The controller 22 may acquire, as the target information, an image of the gripping target object 8.

The controller 22 acquires the acquisition point information (step S2). The controller 22 may acquire the acquisition point information from the information acquisition unit 4. The controller 22 may generate the acquisition point information, based on the target information, and thus acquire the acquisition point information.

The controller 22 estimates the gripping position 82, based on the target information (step S3). The controller 22 inputs the target information to the inference model and acquires the estimated result of the gripping position 82 output from the inference model, and thus estimates the gripping position 82. When estimating the gripping position 82 in consideration of the acquisition point information, the controller 22 may also input the acquisition point information to the inference model, and thus cause the inference model to output the estimated result of the gripping position 82 in consideration of the acquisition point information. The controller 22 may set a parameter for instructing the inference model to perform estimation in consideration of the acquisition point information, and thus cause the inference model to output the estimated result of the gripping position 82 in consideration of the acquisition point information.

The controller 22 causes the display 26 to display the estimated result of the gripping position 82 (step S4). The controller 22 determines whether correction information for the estimated result of the gripping position 82 is acquired (step S5). Specifically, when the acquirer 24 receives an input of the correction information from a user who has viewed the estimated result of the gripping position 82, the controller 22 may determine that the correction information is acquired. If the correction information is not acquired (step S5: NO), the controller 22 proceeds to a procedure of step S7. If the correction information is acquired (step S5: YES), the controller 22 corrects the gripping position 82 based on the correction information (step S6).

The controller 22 controls the gripping operation of the robot 2 such that the hand 2B is caused to grip the gripping target object 8 at the estimated gripping position 82 or the corrected gripping position 82 (step S7). After executing the procedure of step S7, the controller 22 ends the execution of the flowchart of FIG. 7.

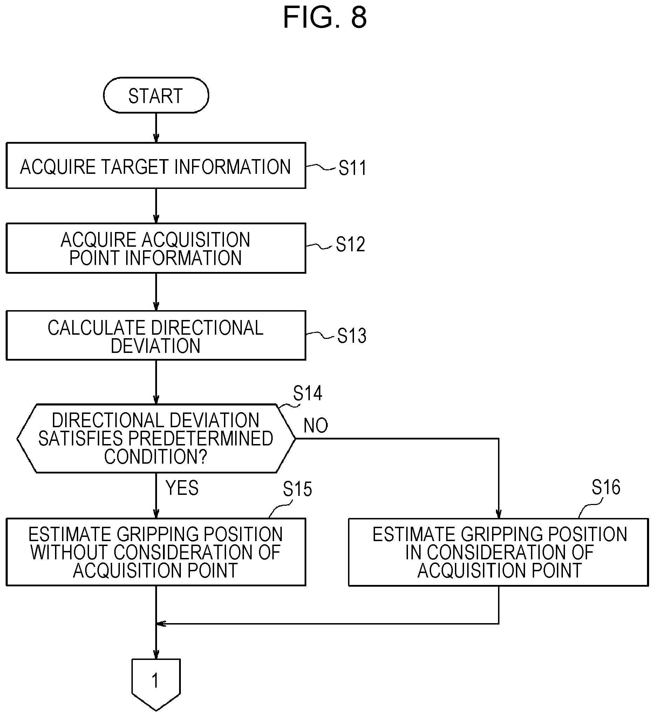

The controller 22 may execute an estimation method including a procedure of a flowchart illustrated in FIG. 8. The controller 22 acquires the target information from the information acquisition unit 4 (step S11). The controller 22 acquires the acquisition point information (step S12). The procedures of steps S11 and S12 may be executed as procedures identical or similar to the procedures of steps S1 and S2 of FIG. 7.

The controller 22 calculates the directional deviation (step S13). Specifically, the controller 22 calculates, as the directional deviation, a difference between the direction from the acquisition point toward the gripping target object 8 and the direction in which the hand 2B grips the gripping target object 8. The controller 22 determines whether the directional deviation satisfies a predetermined condition (step S14).

If the directional deviation satisfies the predetermined condition (step S14: YES), the controller 22 estimates the gripping position 82 without consideration of the acquisition point (step S15). Specifically, the controller 22 acquires the estimated result of the gripping position 82 output from the inference model by inputting the target information to the inference model but not inputting the acquisition point information. After executing the procedure of step S15, the controller 22 proceeds to the procedure of step S4 of FIG. 7.

If the directional deviation does not satisfy the predetermined condition (step S14: NO), the controller 22 estimates the gripping position 82 in consideration of the acquisition point (step S16). Specifically, the controller 22 acquires the estimated result of the gripping position 82 output from the inference model by inputting the acquisition point information to the inference model together with the target information. After executing the procedure of step S16, the controller 22 proceeds to the procedure of step S4 of FIG. 7.

### <Recapitulation>

As described above, the estimation device 20 and the estimation method according to the present embodiment can increase the estimation accuracy of the gripping position 82 even when the gripping direction and the acquisition direction do not coincide with each other. This can consequently increase the gripping stability.

### (Other Embodiments)

Other embodiments are described below.

### <About Hardware Configuration>

The control device 10 or the estimation device 20 may be a server device. The server device may include at least one computer. The server device may cause multiple computers to preform parallel processing. The server device need not include a physical housing, and may be based on a virtualization technology such as a virtual machine or a container orchestration system. The server device may be configured using a cloud service. When the server device is configured using a cloud service, the server device can be configured by using a managed service in combination. That is, the functions of the control device 10 can be implemented as a cloud service.

The server device may include at least one server group. The server group functions as the controller 22. The number of server groups may be one or may be two or more. When the number of server groups is one, functions implemented by the one server group include functions implemented by each server group. The server groups are connected to be able to perform wired or wireless communication with each other.

The control device 10 or the estimation device 20 is depicted as one configuration in each of FIGs. 1 and 2 but may be operated with the multiple configurations being regarded as one system as needed. That is, the control device 10 or the estimation device 20 is a platform of a variable capacity. As a result of using the multiple configurations as the control device 10 or the estimation device 20, even when one configuration is unable to be operated upon the occurrence of an unexpected situation such as a natural disaster, the operation of the system is continued by using the other configurations. In this case, the multiple components are connected to each other via a wired or wireless line to be able to communicate with each other. The multiple configurations may be constructed across a cloud service and an on-premise environment.

The control device 10 or the estimation device 20 is connected to the robot 2 by, for example, a wired or wireless communication line. The control device 10, the estimation device 20, or the robot 2 mutually includes a communication device using a standard protocol, and can perform bidirectional communication.

The control device 10 may control the robot 2 to cause the hand 2B to grip the gripping target object 8 at the gripping position 82 estimated by the estimation device 20. The control device 10 may control the robot 2 to cause the hand 2B to grip the gripping target object 8 at the gripping position 82 estimated by executing the estimation method. The control device 10 and the estimation device 20 may be integrated together.

### <Inspection or Correction of Estimated Result>

As described above, the controller 22 inputs the target information to the inference model and estimates the gripping position 82. The controller 22 may further process the target information with a rule-based algorithm, and thus calculate the gripping position 82. The rule-based algorithm may include, for example, template matching or may include processing using a map.

When the controller 22 calculates the gripping position 82 using a map, the controller 22 may generate, for example, a map for identifying the state of the hand 2B (such as an interval between the fingers 2C, or a thickness or width of the fingers 2C). The controller 22 may generate a rule map representing a suitability of each portion of the gripping target object 8 as the gripping position 82. The rule map may include, for example, a surrounding environment map representing a surrounding environment of the gripping target object 8, an object map representing the characteristics (such as a shape, a center of gravity, or a material) of the gripping target object 8, and a contact map representing a rule based on a relationship between the hand 2B and the state of the surface of the gripping target object 8.

The controller 22 may compare the gripping position 82 calculated with the rule-based algorithm, with the gripping position 82 estimated with the inference model. The controller 22 may inspect whether the estimation accuracy of the estimated result of the gripping position 82 exceeds a predetermined accuracy, based on a result of the comparison. The controller 22 may correct the estimated result of the gripping position 82, based on the result of the comparison, and determine the corrected estimated result as the gripping position 82. In other words, the controller 22 may inspect or correct the estimated result of the gripping position 82 obtained with the inference model, based on a result obtained by processing the information on the gripping target object 8 (target information) with the rule-based algorithm.

The use of the result obtained with the rule-based algorithm can increase the accuracy of the gripping position 82. This can consequently increase the gripping stability.

### <Superimposed Display of Estimated Result of Gripping Position 82>

As described above, the controller 22 may cause the display 26 to display the estimated result of the gripping position 82 of the gripping target object 8. The controller 22 may cause the display 26 to display a superimposition image in which an image representing the estimated result of the gripping position 82 of the gripping target object 8 is superimposed on an image representing the information on the gripping target object 8. The user visually recognizes the superimposition image, and thus can determine how to correct the gripping position 82.

The controller 22 may transform an image of the gripping target object 8 captured from the acquisition point into an image captured if the gripping target object 8 is imaged from the gripping direction, and cause the display 26 to display the transformed image. That is, the controller 22 may transform an image representing the information on the gripping target object 8 into an image obtained if the information on the gripping target object 8 is acquired from the direction in which the hand 2B grips the gripping target object 8. The controller 22 may transform the image by perspective projection transformation. The controller 22 may transform the image by coordinate transformation of the point cloud information obtained by imaging the gripping target object 8 using an RGB-D camera. The RGB-D camera acquires a color image (or a grayscale image) and depth data together. Transforming an image and displaying the transformed image make it easier for the user to determine how to correct the gripping position 82.

The controller 22 may receive, via the acquirer 24, a user input for correcting the gripping position 82 based on the superimposition image. The controller 22 may correct the gripping position 82, based on the user input. In this way, the accuracy of the gripping position 82 can be increased. This can consequently increase the gripping stability.

The controller 22 may retrain the inference model, based on the input for correcting the gripping position 82. The controller 22 may accumulate inputs for correcting the gripping position 82, and collectively use the accumulated correction inputs in retraining of the inference model upon the number of accumulated correction inputs being equal to or greater than a predetermined number.

The controller 22 may process, with a correction filter, the estimated result of the gripping position 82 output from the inference model, and thus correct the gripping position 82. The controller 22 may update the correction filter, based on the input for correcting the gripping position 82. The controller 22 may accumulate inputs for correcting the gripping position 82, and collectively use the accumulated correction inputs in update of the correction filter upon the number of accumulated correction inputs being equal to or greater than a predetermined number.

Although the embodiments of the control device 10 have been described above, the embodiments of the present disclosure may be implemented as, in addition to a method or a program for implementing the device, a storage medium (for example, an optical disk, a magneto-optical disk, a CD-ROM (Compact Disc Read-Only Memory), a CD-R (Compact Disc Recordable), a CD-RW (Compact Disc Rewritable), a magnetic tape, a hard disk, or a memory card) in which the program is recorded.

The implementation of the program is not limited to an application program such as object code compiled by a compiler or program code executed by an interpreter, and can also take any form such as a program module incorporated into an operating system. The program may or may not be configured so that all processing is performed only in a CPU on a control board. The program may be executed entirely or partially by another processing unit mounted on an expansion board or expansion unit added to the board as necessary.

While the embodiments of the present disclosure have been described based on the various drawings and examples, it is to be noted that a person skilled in the art can make various variations or corrections based on the present disclosure. Therefore, it is to be noted that these variations or corrections are within the scope of the present disclosure. For example, the functions and the like included in the components and the like can be rearranged without causing any logical contradiction, and multiple components and the like can be combined into one or divided.

All of the constituent elements described in the present disclosure and/or all of the disclosed methods or all of the disclosed processing steps can be combined in any combination, except for combinations in which features thereof are mutually exclusive. Each of the features described in the present disclosure can be replaced by alternative features that serve for the same, equivalent, or similar purposes, unless explicitly negated. Therefore, unless explicitly negated, each of the disclosed features is merely one example of a comprehensive set of identical or equivalent features.

The embodiments according to the present disclosure are not limited to any of the specific configurations of the embodiments described above. The embodiments according to the present disclosure can be extended to all novel features, or combinations thereof, described in the present disclosure, or all novel methods, or processing steps, or combinations thereof, described in the present disclosure.

### REFERENCE SIGNS

1 robot control system (4: information acquisition unit, 5: operation range of robot, 6: work start table, 7: work target table, 10: control device)
2 robot (2A: arm, 2B: hand, 2C: finger)
8 gripping target object (82: gripping position)
20 estimation device (22: controller, 24: acquirer, 26: display)
30 trained model (31: first model, 32: second model)
50F, 50T estimated gripping position

## Claims

1. An estimation device comprising:
an acquirer configured to acquire information on a holding target object to be held by a holder; and
a controller configured to estimate a holding position at which the holder is caused to hold the holding target object, based on the information on the holding target object in consideration of an acquisition point of the information on the holding target object.

2. An estimation device comprising:
an acquirer configured to acquire information on a holding target object to be held by a holder; and
a controller configured to estimate a holding position at which the holder is caused to hold the holding target object, based on the information on the holding target object, wherein
the controller is configured to:
calculate, as a directional deviation, a difference between a direction from an acquisition point of the information on the holding target object toward the holding target object and a direction in which the holder holds the holding target object;
estimate the holding position at which the holder is caused to hold the holding target object, based on the information on the holding target object if the directional deviation satisfies a predetermined condition; and
estimate the holding position at which the holder is caused to hold the holding target object, based on the acquisition point and the information on the holding target object if the directional deviation does not satisfy the predetermined condition.

3. The estimation device according to claim 1 or 2, wherein
the controller is configured to
input the information on the holding target object to an inference model, and estimate, as the holding position, an inferred result output from the inference model.

4. The estimation device according to claim 3, wherein
the controller is configured to
inspect or correct an estimated result of the holding position obtained by the inference model, based on a result obtained by processing the information on the holding target object with a rule-based algorithm.

5. The estimation device according to claim 3 or 4, wherein
the inference model includes a convolution layer configured to receive an input of the information on the holding target object, and a fully connected layer configured to process an output of the convolution layer and output an estimated result of the holding position, and
the fully connected layer includes a layer that takes the acquisition point into consideration.

6. The estimation device according to any one of claims 1 to 5, wherein
the controller is configured to
display a superimposition image in which an image representing an estimated result of the holding position is superimposed on an image representing the information on the holding target object.

7. The estimation device according to claim 6, wherein
the controller is configured to
transform the image representing the information on the holding target object into an image obtained if the information on the holding target object is acquired from a direction in which the holder holds the holding target object.

8. The estimation device according to claim 6 or 7, wherein
the controller is configured to
receive a user input for correcting the holding position based on the superimposition image.

9. The estimation device according to any one of claims 1 to 8, wherein
the controller is configured to
acquire acquisition point information for specifying the acquisition point.

10. The estimation device according to claim 9, wherein the acquisition point information is information for specifying a predefined acquisition point.

11. The estimation device according to claim 9, wherein the acquisition point information is information representing a direction in which the information on the holding target object is acquired, by roll, pitch, and yaw or by quaternions with respect to a position of the holding target object serving as an origin.

12. The estimation device according to any one of claims 1 to 8, wherein
the controller is configured to
generate acquisition point information for specifying the acquisition point, based on the information on the holding target object.

13. An estimation method comprising:
acquiring information on a holding target object to be held by a holder; and
estimating a holding position at which the holder is caused to hold the holding target object, based on the information on the holding target object in consideration of an acquisition point of the information on the holding target object.

14. An estimation method comprising:
acquiring information on a holding target object to be held by a holder;
calculating, as a directional deviation, a difference between a direction from an acquisition point of the information on the holding target object toward the holding target object and a direction in which the holder holds the holding target object;
estimating the holding position at which the holder is caused to hold the holding target object, based on the information on the holding target object if the directional deviation satisfies a predetermined condition; and
estimating the holding position at which the holder is caused to hold the holding target object, based on the acquisition point and the information on the holding target object if the directional deviation does not satisfy the predetermined condition.

15. A control device configured to cause a holder to hold a holding target object at a holding position estimated by the estimation device according to any one of claims 1 to 12 or at a holding position estimated by executing the estimation method according to claim 13 or 14.
